# EUROPEAN PATENT SPECIFICATION

(11) **EP 1 040 607 B1**
(45) Date of publication and mention of the grant of the patent: **06.08.2003**
(21) Application number: 98962292.3
(22) Date of filing: 18.12.1998
(51) Int. Cl.: H04B 10/12

(54) **A METHOD AND A SYSTEM FOR CODING WDM SIGNALS**
VERFAHREN UND VORRICHTUNG ZUR KODIERUNG VON WDM SIGNALEN
PROCEDE ET SYSTEME POUR LE CODAGE DE SIGNAUX MULTIPLEXES PAR REPARTITION EN LONGUEUR D'ONDE

(30) Priority: 19.12.1997 DK 149897
(43) Date of publication of application: 04.10.2000
(73) Proprietor: TELLABS DENMARK A/S, 2750 Ballerup (DK)
(72) Inventor: PEDERSEN, Claus, Friis, DK-2700 Brönshöj (DK); JöRGENSEN, Carsten, Gudmann, DK-4000 Roskilde (DK)
(74) Representative: Boesen, Johnny Peder
(86) International application number: DK9800565
(87) International publication number: WO99033200

(56) References cited:
- US-A- 5 212 579
- US-A- 5 371 625

## Description

### Field of the art

The invention relates to a method as defined in the introductory portion of claim 1 for the transmission of optical data signals in a WDM system comprising two or more wavelength multiplexed data signals, wherein the multiplexed data signals are transmitted optically at mutually different wavelengths.

The invention moreover relates to a system as defined in the introductory portion of claim 4 for the transmission of WDM data signals, said system comprising at least one WDM multiplexer and at least one WDM demultiplexer connected thereto via an optical signal path, the optical inputs of the WDM multiplexer being fed by E/O converters, such as lasers, which each generate a channel-specific wavelength, said E/O converters being modulated by data signals.

In connection with the ever increasing use of optical transmission fibres for data communication/telecommunication there is an ever greater need for the development of an increased transmission capacity. This development means that it becomes increasingly difficult for the existing cable connections to offer the capacity which the market can consume. The development has not become less pronounced with the growing popularity and use of e.g. the internet. Another example is the increased transmission need in video transfer via data signals on the telecommunications network.

A consequence of this development is of course that the transmission capacity in the existing cable networks has to be extended and/or made more effective. As extension of the optical cable network is an extremely expensive operation, it is attempted to optimize the use of the existing cable network to the greatest extent possible without laying further cables, when this can be avoided. This may e.g. be done by modifying or replacing the transmission hardware used. In spite of the implementation costs involved by this, the costs will only be a fraction of the costs which supplementary laying of new cable connections would involve.

Two concrete examples of this modification are known from TDM, Time Division Multiplexing, and WDM, Wavelength Division Multiplexing, whereby the data capacity may be increased considerably. The most important difference between the two types of transmission of TDM may be considered as a purely sequential transmission protocol, where a specific range of the data sequence is allocated to each transmission channel, while WDM may rather be regarded as a parallel and mutually independent transmission of several optical channels in the same fibre, a specific wavelength being allocated to each channel.

By nature, a drawback of TDM is that it basically serves to increase the data channels at disposal, but does not increase the overall transmission capacity without increased transmission rate. WDM, however, provides both an increase in the data channels at disposal and a corresponding increase in the transmission capacity. In practice, the transmission wavelengths used will be located within a relatively small optical window with small wavelength intervals, which together are within the operational range of the optical amplifiers. Thus, it is abundantly clear that the data capacity of the overall transmission system is increased very strongly for each added WDM channel.

The number of these channels thus increases greatly, and the 4-16 channels used at present are expected to be extended currently in the years to come in step with the development of the hardware components necessary for the purpose. This particularly applies to the necessary optical filters and laser components.

However, a problem involved by the use of WDM is that the individual channels at the receiver side are to be branched again to separate signals after transmission. This problem is particularly pronounced at the receiver side where the individual demultiplexed signals, although they might be found, cannot readily be identified unambiguously under all conditions, as they usually do not have channel identification in the data frame for WDM channel identification. Further, it is difficult to decide where a channel has dropped out or is just passive for a period of time.

US 5 212 579 describes a system in which amplitude modulated television signals are used to frequency modulate an optical carrier in order to combine the advantages of AM and FM. The document does not deal with the modulation of an identification signal on the optical signals.

US 4 841 519 discloses a method of transmitting wavelength division multiplexed data signals in which each signal is amplitude modulated with a low frequency signal for identification purposes.

When each data signal (D1-Dn) at the transmitter side is AM modulated with at least one LF pilot signal (f1, f2,..fn) which is specific for the data signal concerned, it is possible to perform a simple unambiguous on/off detection of the WDM channels at the receiver side.

A further advantage is that the overall transmission system may be varied dynamically, so that given transmission channels do not necessarily have to be located to a specific filter in the multiplexer. A possible change in wavelengths in the WDM channels at the transmitter side will thus only cause the tuneable filters at the receiver side to tune into the new or changed WDM channels automatically or under control.

However, it is often a drawback by WDM systems having a large number of channels that a low frequency pilot signal is needed for each channel, because, as a consequence, also pilot signals having a similar number of frequencies are needed.

Therefore, it is an object of the invention to provide a method and a system of the above mentioned type, in which each data signal may be coded unambiguously in such a manner that the total number of employed pilot signals of different frequency is reduced.

According to the invention, this is achieved in that each data signal is AM modulated with a combination of at least two LF pilot tone signals. An essential advantage of this coding is thus that the multiplexed optical WDM signal has a limited number of different pilot signal components. This circumstance becomes extremely pronounced with an increase in the channels of the WDM system, making it necessary to extend the bandwidth of the WDM signal at disposal for the desired LF components. As pilot signals should be kept below a limit frequency of about 50 kHz to the greatest possible extent in order not to turn into noise in the LF components of the WDM signal, the present embodiment will thus allow marking of more optical WDM channels than would otherwise have been possible. It should be noted in this connection that the more closely spaced the individual pilot frequencies are, the more narrow-banded the filters must be at the receiver side. It should additionally be mentioned that the invention is also particularly advantageous in connection with the identification of the pilot signals at the receiver side, as the bandwidth of the filter to be used in order to filter the pilot signals must be relatively great. This means in turn that the time constant of the filters may be minimized, thereby allowing the detection response time to be minimized at the receiver side.

It will thus be appreciated that the advantages of the invention become more pronounced with a growing number of WDM channels.

When the data signals (D1-Dn) are AM modulated with the pilot signal (Ps-Pn) before the E/O conversion, an advantageous embodiment of the invention is achieved, as the electrical modulation of the data signal may be obtained in a simple manner by modulation with electrical pilot signal generators.

When the LF pilot tone combination comprises r+1 mutually different pilot signals for a 2^{r} channel WDM systemr in which all the frequencies of the pilot signals used are below 50 kHz, a particularly advantageous embodiment of the invention is achieved, as n+1 different pilot signals are sufficient for unambiguously modulating all the channels in a 2^{r} channel WDM system. It will likewise be appreciated that the invention is particularly advantageous with an increasing number of channels. For example, according to the invention, a 256 channel WDM system may be coded with just nine different pilot signals, all of which can be detected using relatively inexpensive electrical filters with a small time constant. Scanning in the demultiplexer over a given optical domain may thus be performed extremely quickly according to the invention.

It should moreover be noted that r+1 coding of the WDM channels ensures that all WDM channels are marked and can therefore be recognized positively.

When the demultiplexer is provided with tuneable BP filters, which each are controlled by a control unit in response to the emitted pilot tone content on the outputs of the O/E converters, so that each tuneable filter is tuned into a well-defined and identified WDM channel, a particularly effective control and monitoring of the individual WDM channels is achieved.

If some channels might have dropped out, either because of a technical error or because the system is e.g. in a low load period, the control unit can positively detect how many and specifically which channels are actually present on the output of the demultiplexer, and the control unit can record on the basis of this information how many and which channels are not present on the demultiplexer.

Accordingly, it will be possible to allow the tuneable filters in the demultiplexer to scan the fed light spectrum on the input of the demultiplexer under control of the control unit. This scanning is thus possible with a specific marking of each channel, as, otherwise, the control unit cannot record the WDM channel into which the filter has actually been tuned.

### Drawing

The invention will be described below with reference to the drawing, in which
fig. 1 shows an example of a WDM system employing pilot tones,
fig. 2 shows an example of the spectral distribution of the pilot tones used,
fig. 3 shows an example of how WDM channels are distributed relative to wavelength,
fig.4 shows an example of a preferred embodiment of the invention, and
fig. 5 schematically shows how a 16 channel WDM may be AM modulated by just five pilot tones.

### Example

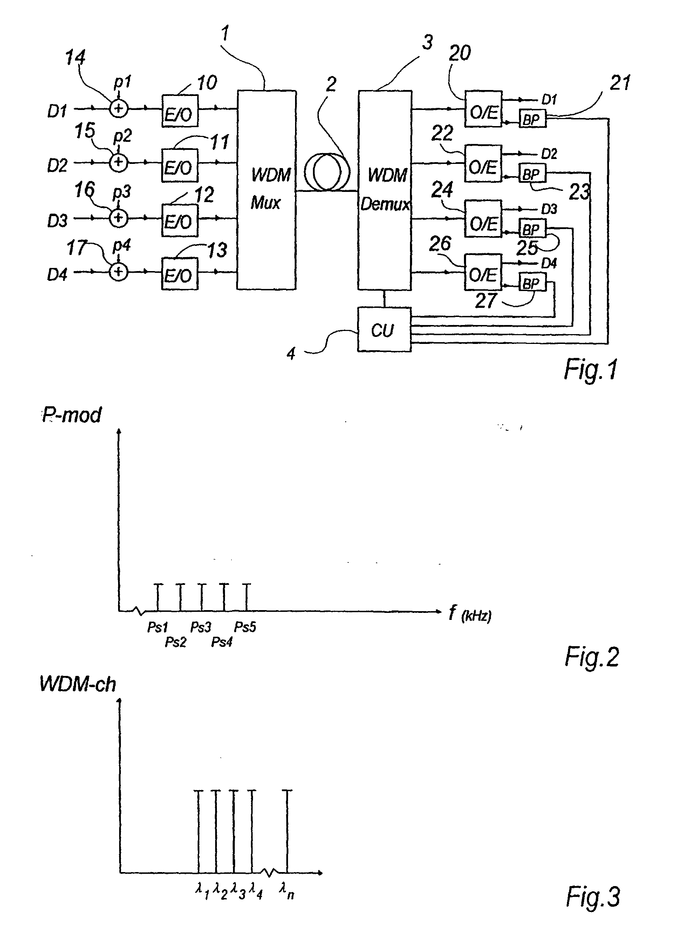

Fig. 1 shows an illustration of a WDM system in which pilot signals are used.

The four channel WDM system shown comprises a WDM multiplexer 1 which is optically connected to a WDM demultiplexer 3 by means of an optical fibre 2.

The system comprises four summation units 14, 15, 16 and 17 which sum up four data signals D1, D2, D3 and D4 and a corresponding channel-specific pilot signal p1, p2, p3 and p4.

Subsequently, the amplitude modulated electrical signals are fed to the E/O converters 10, 11, 12 and 13, i.e. electrically modulated lasers, which are electrically connected to the summation units 14, 15, 16 and 17. Each laser is thus modulated with signals D1+p1, D2+p2, D3+p3 and D4+p4.

Each data channel D1, D2, D3 and D4 is modulated by the E/O converters at channel-specific wavelengths. The wavelength λ for each channel will typically be within a window of 1550 nm ± 10 nm for standardized systems. A channel position may e.g. be ch1 = 1544 nm, ch2 = 1547 nm, ch3 = 1553 nm, ch4 = 1556 nm. The pilot signal frequency may e.g. be selected to be 10 kHz, 12.5 kHz and 17.5 kHz for each channel.

The multiplexed pilot signal modulated signals are then transmitted to the WDM demultiplexer 3 via the optical transmission path 2 in which the signal is split into four separate optical signals and fed to four O/E converters 20, 22, 24 and 26 by means of tuneable optical BP filters not shown tuneable in the demultiplexer 3. The O/E converters 20, 22, 24 and 26 will typically be formed by photodiodes.

The electrical output from the O/E converters 20, 22, 24 and 26 is subsequently split into an HF and an LF component by means of an electrical, tuneable LP/BP filter arrangement 21, 23, 25 and 27 arranged for each channel. The LF component, which contains the channel-specific modulation signal on the data signal, is subsequently fed back electrically to a control unit 4, CU, for each channel, said control unit controlling the tuneable filters in the demultiplexer 3 on the basis of the information achieved. The HF components remaining after the LP filtering then constitute the original data signals D1, D2, D3 and D4.

In practice, the splitting of the LF and HF components may take place in several ways known per se within the scope of the invention.

The HF signals wavelength filtered in the demultiplexer 3, i.e. D1, D2, D3 and D4 each having a channel-specific identifier p1, p2, p3, p4 modulated thereon, can thus be recognized unambiguously by means of the identifier p1, p2, p3 and p4, and the tuneable filters in the demultiplexer 3 can therefore scan the added light spectrum on the input of the demultiplexer under control of the control unit 4. This scanning is thus just possible with a specific marking of each channel, as the control unit cannot record either into which WDM channel the filter has actually been tuned.

If a tuneable filter has thus been tuned into an already found WDM channel, the control unit 4 will record this coincidence and ensure that the filter continues to scan until a channel not previously "locked" has been found. Further, the control unit 4 will be able to record when all the searched channels have been found, and then the scanning is interrupted.

Conversely, the coding technique according to the invention ensures that the output of the demultiplexer, or more specifically the output of the O/E converters has full information on which channels are present and on which output D1, D2, D3, D4 these are placed.

It will be appreciated that D1, D2, D3 and D4 will not necessarily or do not have to emerge from the O/E converters 20, 22, 24 and 26 in the well-arranged order which is outlined in the figure. If a concrete output layout should be desired, it is possible to adapt the control unit 4 for this purpose.

A distinct advantage of marking each wavelength with an LF signal is that each signal may be identified unambiguously using relatively inexpensive and non-bulky LF filters.

Finally, it should be noted that the example shown is monodirectional. It will be appreciated, however, that the invention may also be implemented in a bidirectional WDM system.

Fig. 2 shows an illustration of how the components for the coding of a data channel may be constructed.

For one thing, LF components are used, which should typically be selected to be below an upper limit frequency of 50 kHz, thereby ensuring that the pilot signals do not interfere with the HF signal and thereby impair the transmission quality.

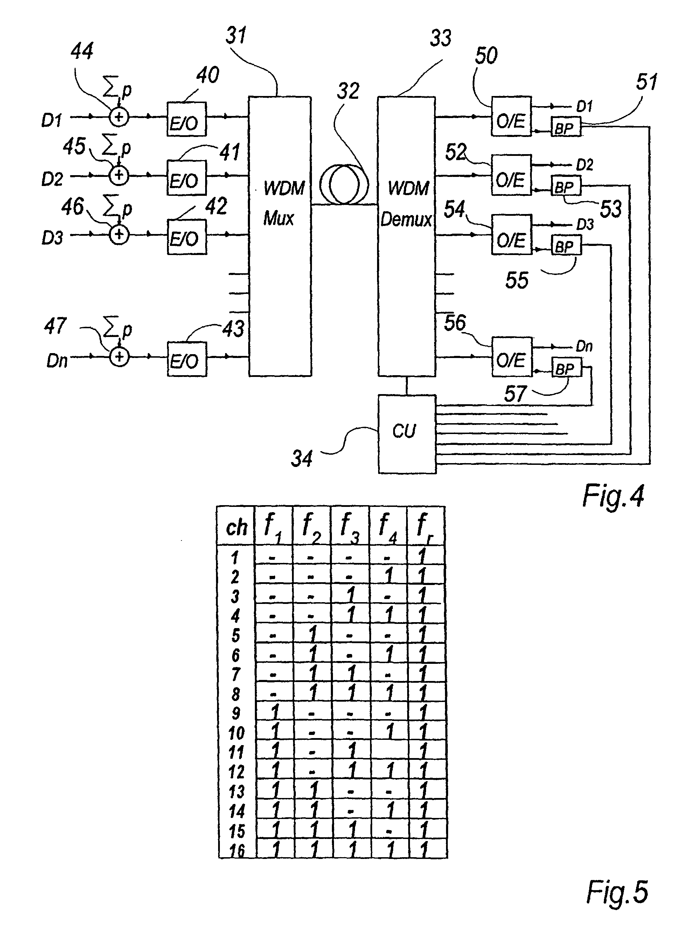

The example shown uses five different pilot signals Ps1, Ps2, Ps3, Ps4 and Ps5, as the signals shown may be used for complete multi pilot signal coding of a sixteen channel WDM system. The coding technique used will be described more fully with reference to fig. 5. It will be appreciated that more or fewer mutually different pilot signals may be used depending on the coding technique and the number of WDM channels.

Ps1, Ps2, Ps3, Ps4 and Ps5 may e.g. be selected to be 10 kHz, 12.5 kHz, 15 kHz, 17.5 kHz and 20 kHz, respectively.

If the pilot signal laying was to correspond to the example shown in fig. 1, the selected pilot signals would e.g. be Ps1, Ps2, Ps3 and Ps4.

It should be stressed that the figure just serves to illustrate the invention, which applies e.g. to the size of amplitude ratios. It will moreover be appreciated that the illustrated frequency intervals are just to serve to illustrate the mutual spacing between pilot signals and the frequency content of the data signal, respectively.

It will be seen from fig. 3 how the transmission channels may be distributed over the wavelengths λ1, λ2, λ3, λ4 and up to λn. In practice, all the channels will be distributed over a window of 1550 nm ± 10 nm. In systems using a relatively large number of WDM transmission channels, the wavelength intervals are thus very small.

Fig. 4 shows an additional and preferred embodiment of the invention in which a plurality of pilot channels are coded on the data channel.

As appears from fig. 2, the number of the necessary pilot tones according to fig. 1 will quickly become very large corresponding to the current number of channels. This should be seen in relation to the circumstance that the pilot signals should be below 50 kHz in order not to interfere with the data traffic in the WDM channel.

Such a problem will be eliminated in practice in fig. 4, since, according to this embodiment, each channel is coded with a combination of pilot signals Σp, which are subsequently split and identified unambiguously as a channel marking at the receiver side.

The shown example comprises n-channel WDM data signals which each are modulated in the electrical domain with a combination of pilot signals Σp. This combination should be regarded as a purely binary coding of each data signal by means of LF pilot signals.

The system thus includes n summation units 44, 45, 46 and 47 which sum up n data signals D1-Dn and a corresponding channel-specific pilot signal of combinations of p₁-pᵢ, where "i" corresponds to the number of mutually different LF pilot signals.

The actual coding of the data signal will be described more fully with reference to fig. 5.

Subsequently, the summed electrical signals are fed to E/O converters 40, 41, 42 and 43, i.e. electrically modulated lasers, which are electrically connected to the summation units 44, 45, 46 and 47.

The wavelength λ for each channel will typically be within a window of 1550 nm ± 10 nm in standardized systems.

The multiplexed pilot signal modulated signals are then transmitted to the WDM demultiplexer 33 via the optical transmission path 32, in which the signal is split to n separate optical signals and is fed to n O/E converters 50, 52, 54 and 56 by means of tuneable optical BP filters not shown in the demultiplexer 33. The O/E converters 50, 52, 54 and 56 will typically be formed by photodiodes.

The electrical output from the O/E converters 50, 52, 54 and 56 is subsequently split into an HF component and an LF component by means of an electrical, tuneable LP/BP filter arrangement 51, 53, 55 and 57 provided for each channel. The LF component containing the channel-specific modulation signal on the data signal is then fed back electrically for each channel to a control unit 4, CU, which controls the tuneable filters in the demultiplexer 3 on the basis of the information achieved. The HF components remaining after the LP filtering then constitute the original data signals D1-Dn.

The HF signals BP filtered in the demultiplexer 33, i.e. D1-Dn each having a channel-specific identifier p1, p2, p3, ... pᵢ modulated thereon, can thus be recognized unambiguously by means of the identifier formed by the pilot signals, and the tuneable filters in the demultiplexer 33 can therefore scan the added light spectrum on the input of the demultiplexer under control of the control unit 34. This scanning is thus only possible with a specific marking of each channel, as, otherwise, the control unit will not be able to record into which WDM channel the filter has actually been tuned. Thus, the control unit 34 will ensure with simple control algorithms that the tuneable filters in the demultiplexer 33 track all the various channels which may be found on the input of the multiplexer, i.e. up to n channels.

If some channels might have dropped out, either because of a technical error or because the system is e.g. in a low load period, the control unit can positively detect how many and specifically which channels are actually present on the output of the demultiplexer 33, and, on the basis of this information, the control unit 34 can also record how many and which channels are not present on the demultiplexer.

Finally, it should be mentioned that the invention is not restricted to monodirectional WDM signals.

Fig. 5 shows a table of an example of a coding of a 16-channel WDM system.

The example shown uses five pilot tones with the frequencies f₁, f₂, f₃, f₄ and fᵣ which together may be modulated on the individual data channels at the transmitter side so that these may subsequently be found and recognized at the receiver side.

## Claims

1. A method for the transmission of optical data signals in a WDM system comprising two or more wavelength multiplexed data signals, wherein the multiplexed data signals are transmitted optically at mutually different wavelengths, and wherein the data signals (D1-Dn) at the transmitter side are modulated for identification by AM modulation with LF pilot signals (f1, f2, ... fn), **characterized in that** each data signal is modulated for identification by AM modulation with a combination of at least two LF pilot tone signals.

2. A method according to claim 1, **characterized in that** the data signals (D1-Dn) are AM modulated with the pilot signals (P1-Pn) before the E/O conversion.

3. A method according to claims 1 or 2, **characterized in that** the LF pilot tone combination comprises r+1 mutually different pilot signals for a 2^{r}-channel WDM system, in which all the frequencies of the pilot signals used are below 50 kHz.

4. A system for the transmission of WDM data signals, comprising
a WDM multiplexer (31) and a WDM demultiplexer (33) connected thereto via an optical signal path (32), the optical inputs of the WDM multiplexer (31) being fed by E/O converters (10, 11, 12, 13; 40, 41, 42, 43), such as lasers, which each generate a channel-specific wavelength (λ1, λ2, λ3, ... λn), said E/O converters being modulated by data signals (D1, D2, D3, ... Dn), and wherein the system is additionally adapted to AM modulate the data signals (D1, D2, D3, ... Dn) with LF pilot signals (Ps1, Ps2, Ps3, ... Psn) for identification of the data signals before these are fed to the E/O converters (10, 11, 12, 13; 40, 41, 42, 43), said LF pilot signals having mutually different frequencies, **characterized in that** the system is adapted to AM modulate each data signal (D1, D2, D3, ... Dn) with a combination of at least two LF pilot signals specifically selected for the data signal.

5. A system according to claim 4, **characterized in that** the demultiplexed optical outputs of the demultiplexer (3; 33) are connected to O/E converters (20, 22, 24, 26; 50, 52, 54, 56), such as photodiodes, said O/E converters being adapted to split the fed signals into an electrical HF data signal (D1-Dn) and an electrical LF pilot tone signal, said split LF pilot tone signal being fed to a detection arrangement which is adapted to detect which pilot signals (Ps1, Ps2, Ps3, ... Psn) or which combinations of pilot signals the LF signal contains.

6. A system according to claim 4 or 5, **characterized in that** the demultiplexer (3; 30) is provided with tuneable BP filters, which each are controlled by a control unit (4, 34) in response to the emitted pilot tone content on the outputs of the O/E converters (20, 22, 24, 26; 50, 52, 54, 56) so that each tuneable filter is tuned into a well-defined and identified WDM channel.

## Patentansprüche

1. Verfahren zur Übertragung von optischen Datensignalen in einem WDM-System, umfassend zwei oder mehr wellenlängengemultiplexte Datensignale, wobei die gemultiplexten Datensignale bei untereinander verschiedenen Wellenlängen optisch übertragen werden und wobei die Datensignale (D1-Dn) an der Senderseite mit Niederfrequenzpilotsignalen (f1, f2, ... fn) durch Amplitudenmodulation zur Identifizierung moduliert werden, **dadurch gekennzeichnet, dass** jedes Datensignal mit einer Kombination von mindestens zwei Niederfrequenzpilottonsignalen durch Amplitudenmodulation zur Identifizierung moduliert wird.

2. Verfahren nach Anspruch 1, **dadurch gekennzeichnet, dass** die Datensignale (D1-Dn) mit den Pilotsignalen (P1-Pn) vor der E/O-Wandlung amplitudenmoduliert werden.

3. Verfahren nach den Ansprüchen 1 oder 2, **dadurch gekennzeichnet, dass** die Niederfrequenzpilottonkombination r+1 untereinander verschiedene Pilotsignale für ein 2^{r}-Kanal-WDM-System umfasst, wobei sämtliche Frequenzen der Pilotsignale, die verwendet werden, unter 50 kHz liegen.

4. System zur Übertragung von WDM-Datensignalen, umfassend
einen WDM-Multiplexer (31) und einen damit über einen optischen Signalpfad (32) verbundenen WDM-Demultiplexer (33), wobei die optischen Eingänge des WDM-Multiplexers (31) durch E/O-Wandler (10, 11, 12, 13; 40, 41, 42, 43), wie z.B. Laser, gespeist werden, die jeweils eine kanalspezifische Wellenlänge (λ1, λ2, λ3, ... λn) erzeugen, wobei die E/O-Wandler durch Datensignale (D1, D2, D3,... Dn) moduliert werden, und wobei das System zusätzlich angepasst ist, um die Datensignale (D1, D2, D3, ... Dn) mit Niederfrequenzpilotsignalen (Ps1, Ps2, Ps3, ... Psn) zur Identifizierung der Datensignale amplitudenzumodulieren, bevor diese den E/O-Wandlern (10, 11, 12, 13; 40, 41, 42, 43) zugeführt werden, wobei die Niederfrequenzpilotsignale untereinander verschiedene Frequenzen aufweisen, **dadurch gekennzeichnet, dass** das System angepasst ist, um jedes Datensignal (D1, D2, D3, ... Dn) mit einer Kombination von mindestens zwei Niederfrequenzpilotsignalen amplitudenzumodulieren, die für das Datensignal speziell ausgewählt sind.

5. System nach Anspruch 4, **dadurch gekennzeichnet, dass** die demultiplexten optischen Ausgänge der Demultiplexer (3; 33) mit O/E-Wandlern (20, 22, 24, 26; 50, 52, 54, 56), wie z.B. Fotodioden, verbunden sind, wobei die O/E-Wandler angepasst sind, um die zugeführten Signale in ein elektrisches Hochfrequenzdatensignal (D1-Dn) und ein elektrisches Niederfrequenzpilottonsignal aufzuspalten, wobei das aufgespaltene Niederfrequenzpilottonsignal einer Detektionsanordnung zugeführt wird, die angepasst ist, um zu detektieren, welche Pilotsignale (Ps1, Ps2, Ps3, ... Psn) oder welche Kombinationen von Pilotsignalen das Niederfrequenzsignal enthält.

6. System nach Anspruch 4 oder 5, **dadurch gekennzeichnet, dass** der Demultiplexer (3; 30) mit abstimmbaren Bandpassfiltern versehen ist, die als Reaktion auf den emittierten Pilottongehalt auf den Ausgängen der O/E-Wandler (20, 22, 24, 26; 50, 52, 54, 56) jeweils durch eine Steuereinheit (4, 34) gesteuert werden, so dass jedes abstimmbare Filter in einem wohldefinierten und identifizierten WDM-Kanal abgestimmt ist.

## Revendications

1. Procédé pour la transmission de signaux de données optiques dans un système WDM comprenant deux ou plus signaux de données multiplexés en longueur d'onde, dans lequel les signaux de données multiplexés sont transmis optiquement à des longueurs d'onde mutuellement différentes, et dans lequel les signaux de données (D1 à Dn) du côté émetteur sont modulés pour identification par modulation d'amplitude (MA) ayant comme signaux pilotes basse fréquence (BF) (f1, f2, ..., fn), **caractérisé en ce que** chaque signal de données est modulé pour identification par une MA de combinaison d'au moins deux signaux à fréquence vocale pilotes BF.

2. Procédé selon la revendication 1, **caractérisé en ce que** les signaux de données (D1 - Dn) sont modulés par MA avec les signaux pilotes (P1 - Pn) avant la conversion électro-optique (E/O).

3. Procédé selon les revendications 1 ou 2, **caractérisé en ce que** la combinaison à fréquence vocale pilote BF comprend r + 1 signaux pilotes mutuellement différents pour un système WDM à 2^{r} canaux dans lequel toutes les fréquences des signaux pilotes utilisés sont en dessous de 50 kHz.

4. Système pour la transmission des signaux de données WDM, comprenant
un multiplexeur WDM (31) et un démultiplexeur WDM (33) raccordé à celui-là via un trajet de signal optique (32), les entrées optiques du multiplexeur WDM (31) étant transmises par des convertisseurs E/O (10, 11, 12, 13 ; 40, 41, 42, 43), tels que des lasers, qui génèrent chacun une longueur d'onde spécifique par canal (λ1, λ2, λ3, ..., λn), lesdits convertisseurs E/O étant modulés par des signaux de données (D1, D2, D3, ..., Dn) et dans lequel le système est, en outre, adapté pour moduler par MA les signaux de données (D1, D2, D3, ..., Dn) avec des signaux pilotes BF (Ps1, Ps2, Ps3, ..., Psn) pour identification des signaux de données avant que ceux-ci ne soient transmis aux convertisseurs E/O (10, 11, 12, 13 ; 40, 41, 42, 43), lesdits
signaux pilotes BF ayant des fréquences mutuellement différentes, **caractérisé en ce que** le système est adapté pour moduler par MA chaque signal de données (D1, D2, D3, ..., Dn) avec une combinaison d'au moins deux signaux pilotes BF spécifiquement choisis pour le signal de données.

5. Système selon la revendication 4, **caractérisé en ce que** les sorties optiques démultiplexées du démultiplexeur (3 ; 33) sont raccordées aux convertisseurs O/E (20, 22, 24, 26 ; 50, 52, 54, 56), tels que des photodiodes, lesdits convertisseurs O/E étant adaptés pour séparer les signaux transmis en un signal de données HF électrique (D1 à Dn) et en un signal à fréquence vocale pilote BF électrique, ledit signal à fréquence vocale pilote BF séparé étant transmis à un arrangement de détection qui est adapté pour détecter quels signaux pilotes (Ps1, Ps2, Ps3, ..., Psn) ou quelles combinaisons de signaux pilotes le signal BF contient.

6. Système selon la revendication 4 ou 5, **caractérisé en ce que** le démultiplexeur (3 ; 30) est prévu avec des filtres passe-bas réglables qui sont chacun commandés par une unité de commande (4, 34) en réponse au contenu en fréquence vocale pilote émis sur les sorties des convertisseurs O/E (20, 22, 24, 26 ; 50, 52, 54, 56) de sorte que chaque filtre est réglable dans un canal WDM bien défini et identifié.
